# EUROPEAN PATENT APPLICATION

(11) **EP 4 412 346 A1**
(43) Date of publication of application: **07.08.2024**
(21) Application number: 21959305.0
(22) Date of filing: 29.09.2021
(51) Int. Cl.: H04W 72/04, H04W 72/12

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/035827
(87) International publication number: WO 2023/053258

(57) **Abstract**

A terminal according to one aspect of the present disclosure includes a receiving section that receives a list of a plurality of cells and that receives a medium access control (MAC) control element (CE) to activate one or more transmission configuration indication (TCI) states for a control resource set for a physical downlink control channel on one cell out of the plurality of cells, and a control section that applies one or more active TCI states to one or more cells out of the plurality of cells. According to one aspect of the present disclosure, it is possible to appropriately determine a TCI state for a plurality of cells/CCs.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a user terminal (terminal, User Equipment (UE)) that controls transmission/reception processing based on information related to quasi-co-location (QCL) (QCL assumption/Transmission Configuration Indication (TCI) state/spatial relation) is under study.

For the future radio communication systems (for example, NR), a method of receiving a physical downlink control channel (PDCCH)/physical downlink shared channel (PDSCH) for higher reliability/high-speed movement is under study.

However, a method for determining a TCI state for a plurality of cells/component carriers (CCs) with consideration of a single frequency network (SFN) is indefinite. Unless the method for determining the TCI state for the plurality of cells/CCs is definite, communication quality reduction, throughput reduction, and the like may occur.

Thus, an object of the present disclosure is to provide a terminal, a radio communication method, and a base station that appropriately determine a TCI state for a plurality of cells/CCs.

### Solution to Problem

A terminal according to one aspect of the present disclosure includes a receiving section that receives a list of a plurality of cells and that receives a medium access control (MAC) control element (CE) to activate one or more transmission configuration indication (TCI) states for a control resource set for a physical downlink control channel on one cell out of the plurality of cells, and a control section that applies one or more active TCI states to one or more cells out of the plurality of cells.

### Advantageous Effects of Invention

According to one aspect of the present disclosure, it is possible to appropriately determine a TCI state for a plurality of cells/CCs.

### Brief Description of Drawings

[FIG. 1] FIG. 1 is a diagram to show an example of simultaneous beam update for a plurality of CCs.
[FIG. 2] FIGS. 2A and 2B are each a diagram to show an example of a unified/common TCI framework.
[FIG. 3] FIG. 3 is a diagram to show an example of aspect 1a/1b.
[FIG. 4] FIG. 4 is a diagram to show an example of aspect 1c/1d/1e.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.
[FIG. 9] FIG. 9 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE expects that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS to have a relationship of QCL type X with (a DMRS for) a certain channel/signal, and this RS may be referred to as a QCL source of QCL type X in the TCI state.

### (Muti-TRP PDSCH/Non SFN)

For NR, one or a plurality of transmission/reception points (TRPs) (multiple TRPs (multi TRP (MTRP))) that perform DL transmission to a UE by using one or a plurality of panels (multiple panels) are under study. Also, the UE that performs UL transmission to one or the plurality of TRPs by using one or a plurality of panels is under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, and the like may be exchanged. From respective TRPs of the multiple TRPs, different code words (CWs) and different layers may be transmitted. As a form of multi-TRP transmission, non-coherent joint transmission (NCJT) may be used.

In the NCJT, for example, TRP #1 performs modulation mapping and layer mapping for a first code word to transmit a first number of layers (for example, 2 layers) and to transmit a first PDSCH by using first precoding. Also, TRP #2 performs modulation mapping and layer mapping for a second code word to transmit a second number of layers (for example, 2 layers) and to transmit a second PDSCH by using second precoding.

Note that a plurality of PDSCHs (multiple PDSCHs) subject to the NCJT may be defined as PDSCHs partially or fully overlapping with each other in relation to at least one of time and frequency domains. That is, a first PDSCH from a first TRP and a second PDSCH from a second TRP may overlap with each other in at least one of time and frequency resources.

It may be assumed that these first PDSCH and second PDSCH are not in a quasi-co-location (QCL) relationship (not quasi-co-located). Reception of the multiple PDSCHs may be interpreted as simultaneous reception of PDSCHs other than a certain QCL type (for example, QCL type D) .

A plurality of PDSCHs (which may be referred to as multiple PDSCHs) from the multiple TRPs may be scheduled by using one DCI (single DCI, single PDCCH) (single master mode, multiple TRPs based on single DCI (single-DCI based multi-TRP)). A respective plurality of PDSCHs from the multiple TRPs may be scheduled by using a plurality of DCIs (multiple DCI, multiple PDCCHs) (multi-master mode, multiple TRPs based on multiple DCI (multi-DCI based multi-TRP)).

For Ultra-Reliable and Low Latency Communications (URLLC) for multiple TRPs, support for repetition of a PDSCH (transport block (TB) or code word (CW)) across the multiple TRPs is under study. Support for repetition schemes (URLLC schemes, reliability enhancement schemes, for example, schemes 1a, 2a, 2b, 3, and 4) across the multiple TRPs on a frequency domain, a layer (spatial) domain, or a time domain is under study. In scheme 1a, multiple PDSCHs from the multiple TRPs are space division multiplexed (SDMed). In schemes 2a and 2b, PDSCHs from the multiple TRPs are frequency division multiplexed (FDMed). In scheme 2a, redundancy versions (RVs) for the multiple TRPs are the same. In scheme 2b, the RVs for the multiple TRPs may be the same, or may be different from each other. In schemes 3 and 4, multiple PDSCHs from the multiple TRPs are time division multiplexed (TDMed). In scheme 3, the multiple PDSCHs from the multiple TRPs are transmitted in one slot. In scheme 4, the multiple PDSCHs from the multiple TRPs are transmitted in different slots.

According to such a multi-TRP scenario, more flexible transmission control using a channel with high quality is possible.

In order to support intra-cell (having the same cell ID) and inter-cell (having different cell IDs) multi-TRP transmissions based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

The UE may judge that the multiple TRPs are multiple TRPs based on multiple DCI when at least one of condition 1 and condition 2 below is satisfied. In this case, the TRPs may be interpreted as CORESET pool indexes.

### [Condition 1]

CORESET pool index of 1 is configured.

### [Condition 2]

Two different values (for example, 0 and 1) of CORESET pool indexes are configured.

The UE may judge that the multiple TRPs are multiple TRPs based on single DCI when the following condition is satisfied. In this case, two TRPs may be interpreted as two TCI states indicated by a MAC CE/DCI.

### [Condition]

In order to indicate one or two TCI states for one code point of a TCI field in DCI, an "enhanced TCI state activation/deactivation MAC CE for a UE-specific PDSCH (Enhanced TCI states Activation/Deactivation for UE-specific PDSCH MAC CE)" is used.

DCI for common beam indication may be a UE-specific DCI format (for example, DL DCI format (for example, 1_1 or 1_2) or UL DCI format (for example, 0_1 or 0_2)), or may be a UE-group common DCI format.

### (Muti-TRP PDSCH/SFN (HST-SFN))

In LTE, arrangement in an HST (high speed train) tunnel is difficult. A large antenna performs transmission to the outside/inside of the tunnel. For example, transmit power of the large antenna is about 1 to 5 W. For handover, it is important for the UE to perform transmission to the outside of the tunnel before entering the tunnel. For example, transmit power of a small antenna is about 250 mW. A plurality of small antennas (transmission/reception points) having the same cell ID and having a distance of 300 m form a single frequency network (SFN). All small antennas in the SFN transmit the same signal at the same time on the same PRB. Assume that a terminal performs transmission/reception for one base station. Actually, the plurality of transmission/reception points transmit identical DL signals. In highspeed movement, transmission/reception points in units of several km form one cell. The handover is performed when the cell is crossed. Therefore, frequency of the handover can be reduced.

In NR, it is assumed that in order to perform communication with a terminal (also described hereinafter as a UE) included in a moving object (HST (high speed train)), such as a train moving at a high speed, a beam transmitted from a transmission point (for example, an RRH) is used. In existing systems (for example, Rel. 15), communication with the moving object performed by transmitting a uni-directional beam from the RRH is supported.

RRHs may be installed along a movement route (or direction of movement, direction of travel, travel route) of the moving object, and a beam may be formed from each RRH towards the direction of travel of the moving object. The RRH to form the uni-directional beam may be referred to as a uni-directional RRH. When the beam is formed towards the direction of travel of the moving object, the moving object receives a minus Doppler shift (-fD) from each RRH.

Note that a case where the beam is formed towards the direction of travel of the moving object is described here, but is not restrictive, and the beam may be formed towards a direction opposite to the direction of travel, or the beam may be formed towards any direction regardless of the direction of travel of the moving object.

In Rel. 16 (or later versions), it is also assumed that a plurality of (for example, two or more) beams are transmitted from the RRH. For example, it is assumed that beams are formed towards both a direction of travel of the moving object and the opposite direction.

A case where, when the beams are formed towards both the direction of travel of the moving object and the opposite direction, RRHs are installed along a movement route of the moving object, and beams are formed from each RRH towards both the direction of travel of the moving object and a direction opposite to the direction of travel is described. An RRH to form a multi-directional (for example, bi-directional) beam may be referred to as a bi-directional RRH.

In this HST, the UE performs communication in a manner similar to that of a single TRP. In base station implementation, transmission from a plurality of TRPs (same cell ID) can be performed.

When two RRHs use the SFN in the bi-directional RRH, in the middle of the two RRHs, the moving object switches from a signal subjected to a minus Doppler shift to a signal subjected to a plus Doppler shift with higher power. In this case, a maximum range of Doppler shift change requiring compensation is a change from -fD to +fD, and doubles as compared to that of the uni-directional RRH.

Note that in the present disclosure, the plus Doppler shift may be interpreted as information related to a plus Doppler shift, a Doppler shift in a plus (positive) direction, or Doppler information about a plus (positive) direction. Also, the minus Doppler shift may be interpreted as information related to a minus Doppler shift, a Doppler shift in a minus (negative) direction, or Doppler information about a minus (negative) direction.

Here, as HST schemes, scheme 0 to scheme 2 (HST scheme 0 to HST scheme 2) below are compared to each other.

In scheme 0, a tracking reference signal (TRS), a DMRS, and a PDSCH are transmitted in common for two TRPs (RRHs) (by using the same time and frequency resources) (normal SFN, transparent SFN, HST-SFN).

In scheme 0, since the UE receives a DL channel/signal by using the equivalent of the single TRP, a TCI state for the PDSCH is one TCI state.

Note that an RRC parameter for distinguish between transmission using the single TRP and transmission using the SFN is defined in Rel. 16. When reporting corresponding UE capability information, the UE may distinguish, based on the RRC parameter, between reception of the DL channel/signal for the single TRP and reception of the PDSCH with assumption of the SFN. On the other hand, the UE may expect the single TRP to perform transmission/reception using the SFN.

In scheme 1, the TRS is transmitted in a TRP-specific manner (by using a time/frequency resource varying depending on the TRPs). In this example, TRS 1 is transmitted from TRP #1, and TRS 2 is transmitted from TRP #2.

In scheme 1, since the UE receives a DL channel/signal from each TRP by using a TRS from each TRP, TCI states for the PDSCH are two TCI states.

In scheme 2, the TRS and the DMRS are transmitted in a TRP-specific manner. In this example, TRS 1 and DMRS 1 are transmitted from TRP #1, and TRS 2 and DMRS 2 are transmitted from TRP #2. Scheme 1 and scheme 2 can further suppress a quick change of a Doppler shift and can estimate/compensate the Doppler shift more appropriately, as compared to scheme 0. Since the DMRS of scheme 2 increases more than the DMRS of scheme 1, maximum throughput of scheme 2 is lower than that of scheme 1.

In scheme 0, the UE switches between the single TRP and the SFN based on higher layer signaling (RRC information element/MAC CE).

The UE may switch between scheme 1/scheme 2/NW pre-compensation scheme based on the higher layer signaling (RRC information element/MAC CE) .

In scheme 1, two TRS resources are configured for respective a direction of travel of the HST and the opposite direction.

In scheme 1, TRPs (TRPs #0, #2, ...) to transmit DL signals towards the opposite direction of the HST transmit a first TRS (TRS arriving from the front of the HST) in identical time and frequency resources (SFN). TRPs (TRPs #1, #3, ...) to transmit DL signals towards the direction of travel of the HST transmit a second TRS (TRS arriving from the back of the HST) in identical time and frequency resources (SFN). The first TRS and the second TRS may be transmitted/received by using different frequency resources.

For example, TRS 1-1 to TRS 1-4 are transmitted as the first TRS, and TRS 2-1 to TRS 2-4 are transmitted as the second TRS. A Doppler shift of the second TRS is not equal to a Doppler shift of the first TRS.

Considering beam management, the first TRS is transmitted by using 64 beams and 64 time resources, and the second TRS is transmitted by using 64 beams and 64 time resources. It is conceivable that a beam of the first TRS and a beam of the second TRS are equal to each other (QCL type D RSs are equal to each other). Multiplexing the first TRS and the second TRS with identical time resources and different frequency resources can enhance resource use efficiency.

A plurality of RRHs installed along a movement route of the HST may be connected to a base band unit (BBU). Each RRH is a bi-directional RRH, and forms beams towards both the direction of travel and the opposite direction on the movement route by using each transmission/reception point (TRP).

In a received signal of the single TRP (SFN)/scheme 1, when the UE receives a signal/channel transmitted from a TRP using a beam towards the direction of travel of the HST (beam from a TRP in a direction opposite to the direction of travel of the HST), a minus Doppler shift (in this example, -fD) occurs. Also, when the UE receives a signal/channel transmitted from a TRP using a beam towards the direction opposite to the direction of travel of the HST (beam from a TRP in the direction of travel of the HST), a plus Doppler shift (in this example, +fD) occurs.

For Rel. 17 (or later versions), a base station that performs, in downlink (DL) signal/channel transmission from a TRP to the UE in the HST, a TRP-based pre- (preparatory) compensation (correction) scheme (pre-Doppler compensation scheme, Doppler pre-compensation scheme, network (NW) pre-compensation scheme (HST NW pre-compensation scheme)) is under study. The TRP performs Doppler compensation beforehand when performing DL signal/channel transmission to the UE, thereby allowing an impact of a Doppler shift in DL signal/channel reception in the UE to be reduced. In the present disclosure, the Doppler pre-compensation scheme may be a combination of scheme 1 and Doppler shift pre-compensation by the base station.

For the Doppler pre-compensation scheme, a case that a TRS from each TRP is transmitted without performing Doppler pre-compensation for the TRS, and a PDSCH from each TRP is transmitted by performing Doppler pre-compensation for the PDSCH is under study.

In the Doppler pre-compensation scheme, a TRP to form a beam towards the direction of travel on the movement route and a TRP to form a beam towards the direction opposite to the direction of travel on the movement route perform DL signal/channel transmission to the UE in the HST after performing Doppler correction. For example, a TRP using a beam towards the direction of travel of the HST (beam from a TRP in a direction opposite to the direction of travel of the HST) performs plus Doppler correction for a signal/channel to be transmitted, and using a beam towards the direction opposite to the direction of travel of the HST (beam from a TRP in the direction of travel of the HST) performs minus Doppler correction for a signal/channel to be transmitted, thereby reducing an impact of a Doppler shift in signal/channel reception in the UE.

In this case, since the UE receives a DL channel/signal from each TRP by using a TRS from each TRP, TCI states for the PDSCH may be two TCI states.

Furthermore, for Rel. 17 (or later versions), dynamic switching between the single TRP and the SFN with a TCI field (TCI state field) is under study. For example, one or two TCI states are configured/indicated in each of TCI code points (code points of the TCI field, DCI code points) by using an RRC information element/MAC CE (for example, Enhanced TCI States Activation/Deactivation for UE-specific PDSCH MAC CE)/DCI (TCI field). The UE may judge that a PDSCH from the single TRP is received when one TCI state is configured/indicated. The UE may judge that a PDSCH from the SFN using multiple TRPs is received when two TCI states are configured/indicated.

In Rel. 16, scheme 1a (repetition scheme 1a) in multiple TRPs for URLLC (reliability) is similar to NCJT in an enhanced Mobile Broadband (eMBB), but transmits a common CW by using respective PDSCHs of two different MIMO layers. Single data is transmitted from two TRPs by using SDM, thereby enhancing reliability for the single TRP.

In Rel. 16, two TCI states configured/indicated for PDSCHs are TCI states for respective DMRS ports, and a different TRP is used for each MIMO layer. Each of the two TCI states indicates a channel property relationship between DMRS reception and another DL-RS (for example, TRS). In this case, a plurality of DMRS ports have a respective plurality of different TCI states (correspond to a respective plurality of different TCI states or are QCLed with a respective plurality of different DL-RSs).

In HST scheme 1 (Rel. 17 (or later versions)), two TCI states configured/indicated for PDSCHs may be TCI states for identical DMRS ports. In this case, one DMRS port has a plurality of different TCI states (corresponds to a plurality of different TCI states or is QCLed with a plurality of different DL-RSs). Each of a plurality of DMRS ports has a plurality of different TCI states (corresponds to a plurality of different TCI states or is QCLed with a plurality of different DL-RSs).

### (Muti-TRP PDCCH)

With respect to a PDCCH/CORESET defined in Rel. 15, one TCI state without a CORESET pool index (CORESETPoolIndex) (which may be referred to as TRP information (TRP Info)) is configured for one CORESET.

With respect to enhancement for a PDCCH/CORESET defined in Rel. 16, in multiple TRPs based on multiple DCI, CORESET pool indexes are configured for respective CORESETs.

For Rel. 17 (or later versions), enhancement 1 and enhancement 2 below related to a PDCCH/CORESET are under study.

### [Enhancement 1]

In a case where a plurality of antennas (small antennas, transmission/reception points (TRPs)) having the same cell ID form a single frequency network (SFN), up to two TCI states can be configured/activated for one CORESET by using higher layer signaling (RRC signaling/MAC CE). The SFN contributes to at least one of enhancements of management and reliability of a high speed train (HST).

### [Enhancement 2]

In repetitive PDCCH transmission (which may be simply referred to as "repetition"), two PDCCH candidates in two search space sets are linked to each other, and each search space set is associated with a corresponding CORESET. The two search space sets may be associated with the same or different CORESETs. One (up to one) TCI state can be configured/activated for one CORESET/search space set by higher layer signaling (RRC signaling/MAC CE). The two SS sets search space sets may be explicitly linked to each other.

If the two search space sets are associated with different CORESETs having different TCI states, the transmission may mean repetitive transmission by multiple TRPs. If the two search space sets are associated with the same CORESET (CORESETs with the same TCI state), the transmission may mean repetitive transmission by a single TRP.

### (Simultaneous Beam Update for Plurality of CCs)

In Rel. 16, one MAC CE can update beam indexes (TCI states) for a plurality of CCs.

Up to two applicable CC lists (for example, applicable-CC-list) can be configured for the UE by RRC. When two applicable CC lists are configured, the two applicable CC lists may correspond to respective intra-band CA in FR1 and intra-band CA in FR2.

A network may activate and deactivate, by transmitting a TCI state activation/deactivation MAC CE for a UE-specific PDSCH (TCI states Activation/Deactivation for UE-specific PDSCH MAC CE), configured TCI states in a set of serving cells or serving cells configured in simultaneous TCI update list 1 (simultaneousTCI-UpdateList1) or simultaneous TCI update list 2 (simultaneousTCI-UpdateList2). If an indicated serving cell is configured as a part of simultaneous TCI update list 1 or simultaneous TCI update list 2, the MAC CE is applied to all serving cells configured in the set of simultaneous TCI update list 1 or simultaneous TCI update list 2.

The network may indicate, by transmitting a TCI state indication MAC CE for a UE-specific PDCCH (TCI states Indication for UE-specific PDCCH MAC CE), configured TCI states in a set of serving cells or serving cells configured in simultaneous TCI update list 1 (simultaneousTCI-UpdateListl) or simultaneous TCI update list 2 (simultaneousTCI-UpdateList2). If an indicated serving cell is configured as a part of simultaneous TCI update list 1 or simultaneous TCI update list 2, the MAC CE is applied to all serving cells configured in the set of simultaneous TCI update list 1 or simultaneous TCI update list 2.

A TCI state activation MAC CE for a PDCCH activates TCI states associated with the same CORESET ID on all BWPs/CCs in the applicable CC list.

A TCI state activation MAC CE for a PDSCH activates TCI states on all BWPs/CCs in the applicable CC list.

A spatial relation activation MAC CE for an A-SRS/SP-SRS activates a spatial relation associated with the same SRS resource ID on all BWPs/CCs in the applicable CC list.

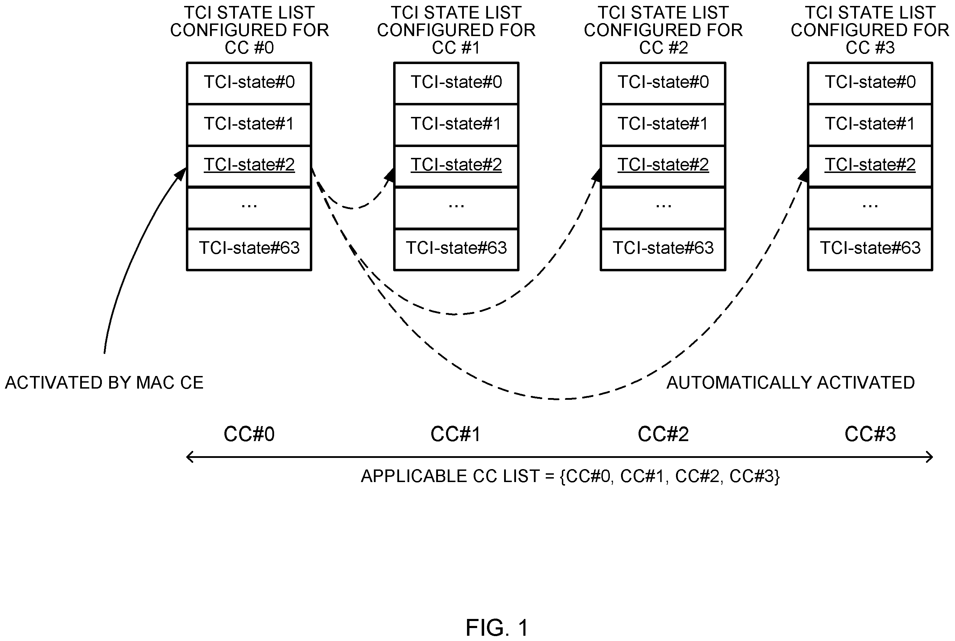

In an example of FIG. 1, an applicable CC list indicating CC #0, CC #1, CC #2, and CC #3 and a list indicating 64 TCI states for a CORESET or a PDSCH on each CC are configured for the UE. When one TCI state on CC #0 is activated by the MAC CE, a corresponding TCI state is activated on CC #1, CC #2, and CC #3.

A case that such simultaneous beam update is only applicable to a single TRP case is under study.

For the PDSCH, the UE may be based on procedure A below.

### [Procedure A]

In one CC/DL BWP or in one set of CCs/BWPs, the UE receives an activation command for mapping up to 8 TCI states to code points of a DCI field (TCI field). When one set of TCI state IDs is activated for one set of CCs/DL BWPs, then an applicable CC list is determined by a CC indicated in the activation command, and the same set of TCI states is applied to all DL BWPs in the indicated CC. Only if a plurality of different values of CORESET pool indices (CORESETPoolIndex) in a CORESET information element (ControlResourceSet) are not provided for the UE, and at least one TCI code point mapped to two TCI states is not provided for the UE, one set of TCI state IDs can be activated for one set of CCs/DL BWPs.

For the PDCCH, the UE may be based on procedure B below.

### [Procedure B]

If up to two lists of cells for simultaneous TCI state activation by a simultaneous TCI update list (at least one of simultaneousTCI-UpdateList-r16 and simultaneousTCI-UpdateListSecond-r16) are provided for the UE by a simultaneous TCI cell list (simultaneousTCI-CellList), the UE applies, to CORESETs having index p in all configured DL BWPs of all configured cells in one list determined based on a serving cell index provided by a MAC CE command, antenna port quasi co-location (QCL) provided by TCI states having the same activated TCI state ID value. Only if a plurality of different values of CORESET pool indices (CORESETPoolIndex) in a CORESET information element (ControlResourceSet) are not provided for the UE, and at least one TCI code point mapped to two TCI states is not provided for the UE, the simultaneous TCI cell list can be provided for the simultaneous TCI state activation.

For a semi-persistent (SP)/aperiodic (AP)-SRS, the UE may be based on procedure C below.

### [Procedure C]

When spatial relation information (spatialRelationInfo) for SP or AP-SRS resources configured by an SRS resource information element (higher layer parameter SRS-Resource) is activated/updated for one set of CCs/BWPs by a MAC CE, then an applicable CC list is indicated by a simultaneous spatial update list (higher layer parameter simultaneousSpatial-UpdateList-r16 or simultaneousSpatial-UpdateListSecond-r16), and in all BWPs in an indicated CC, the spatial relation information is applied to the SP or AP-SRS resources having the same SRS resource ID. Only if a plurality of different values of CORESET pool indices (CORESETPoolIndex) in a CORESET information element (ControlResourceSet) are not provided for the UE, and at least one TCI code point mapped to two TCI states is not provided for the UE, spatial relation information (spatialRelationInfo) for SP or AP-SRS resources configured by an SRS resource information element (higher layer parameter SRS-Resource) is activated/updated for one set of CCs/BWPs by a MAC CE.

The simultaneous TCI cell list (simultaneousTCI-CellList) and simultaneous TCI update list (at least one of simultaneousTCI-UpdateList1-r16 and simultaneousTCI-UpdateList2-r16) are lists of serving cells in which TCI relations can be simultaneously updated by using the MAC CE. simultaneousTCI-UpdateList1-r16 and simultaneousTCI-UpdateList2-r16 do not include the same serving cell.

The simultaneous spatial updated list (at least one of higher layer parameters simultaneousSpatial-UpdatedList1-r16 and simultaneousSpatial-UpdatedList2-r16) is a list of serving cells in which spatial relations can be simultaneously updated by using the MAC CE. simultaneousSpatial-UpdatedList1-r16 and simultaneousSpatial-UpdatedList2-r16 do not include the same serving cell.

Here, the simultaneous TCI update list and the simultaneous spatial updated list are configured by the RRC, the CORESET pool indices of the CORESET are configured by the RRC, and the TCI code point mapped to the TCI states is indicated by the MAC CE.

In the present disclosure, a CC list, a new CC list, a simultaneous TCI cell list, simultaneousTCI-CellList, a simultaneous TCI update list, simultaneousTCI-UpdateList1-r16, simultaneousTCI-UpdateList2-r16, a simultaneous spatial updated list, simultaneousSpatial-UpdatedList1-r16, and simultaneousSpatial-UpdatedList2-r16 may be interchangeably interpreted.

In the present disclosure, simultaneousTCI-UpdateList1, simultaneousTCI-UpdateList1-r16, and simultaneousTCI-UpdateList-r16 may be interchangeably interpreted. In the present disclosure, simultaneousTCI-UpdateList2, simultaneousTCI-UpdateList2-r16, and simultaneousTCI-UpdateListSecond-r16 may be interchangeably interpreted.

In the present disclosure, simultaneousSpatial-UpdatedList1, simultaneousSpatial-UpdatedList1-r16, and simultaneousSpatial-UpdateList-r16 may be interchangeably interpreted. In the present disclosure, simultaneousSpatial-UpdatedList2, simultaneousSpatial-UpdatedList2-r16, and simultaneousSpatial-UpdateListSecond-r16 may be interchangeably interpreted.

### (Unified/Common TCI Framework)

According to a unified TCI framework, UL and DL channels can be controlled by a common framework. Instead of defining a TCI state or a spatial relation for each channel in a manner similar to that of Rel. 15, the unified TCI framework may indicate a common beam (common TCI state) and apply the common beam to all UL and DL channels, or may apply a UL common beam to all UL channels and apply a DL common beam to all DL channels.

One common beam for both DL and UL or a DL common beam and a UL common beam (two common beams in total) are under study.

The UE may expect the same TCI state (joint TCI state, joint TCI pool, joint common TCI pool, joint TCI state set) for the UL and DL. The UE may expect different TCI states (separate TCI states, separate TCI pools, UL separate TCI pool and DL separate TCI pool, separate common TCI pools, UL common TCI pool and DL common TCI pool) for the respective UL and DL.

Default beams for the UL and DL may be unified by MAC CE-based beam management (MAC CE-level beam indication). The default beams may be unified with a default UL beam (spatial relation) by updating a default TCI state for the PDSCH.

A common beam/unified TCI state from the same TCI pool (joint common TCI pool, joint TCI pool, set) for both of the UL and DL may be indicated by DCI-based beam management (DCI-level beam indication). X (> 1) TCI states may be activated by the MAC CE. UL/DL DCI may select one TCI state from X active TCI states. The selected TCI state may be applied to channels/RSs for both of the UL and DL.

The TCI pool (set) may be a plurality of TCI states configured by an RRC parameter, or may be a plurality of TCI states (active TCI states, active TCI pools, sets) activated by the MAC CE, out of a plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. At least one of N and M may be notified/configured/indicated for the UE via higher layer signaling/physical layer signaling.

In the present disclosure, description "N = M = X (X is an arbitrary integer)" may mean that X TCI states (joint TCI states) (corresponding to X TRPs) common to the UL and DL are notified/configured/indicated for the UE. Also, description "N = X (X is an arbitrary integer), M = Y (Y is an arbitrary integer, Y may be equal to X)" may mean that respective X UL TCI states (corresponding to X TRPs) and Y DL TCI states (corresponding to Y TRPs) (that is, separate TCI states) are notified/configured/indicated for the UE.

For example, description "N = M = 1" may mean that one TCI state common to the UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP) .

For example, description "N = M = 2" may mean that a plurality of (two) TCI states common to the UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above-described examples, cases where values of N and M are 1 or 2 are described, but the values of N and M may be 3 or more, and N and M may be different from each other.

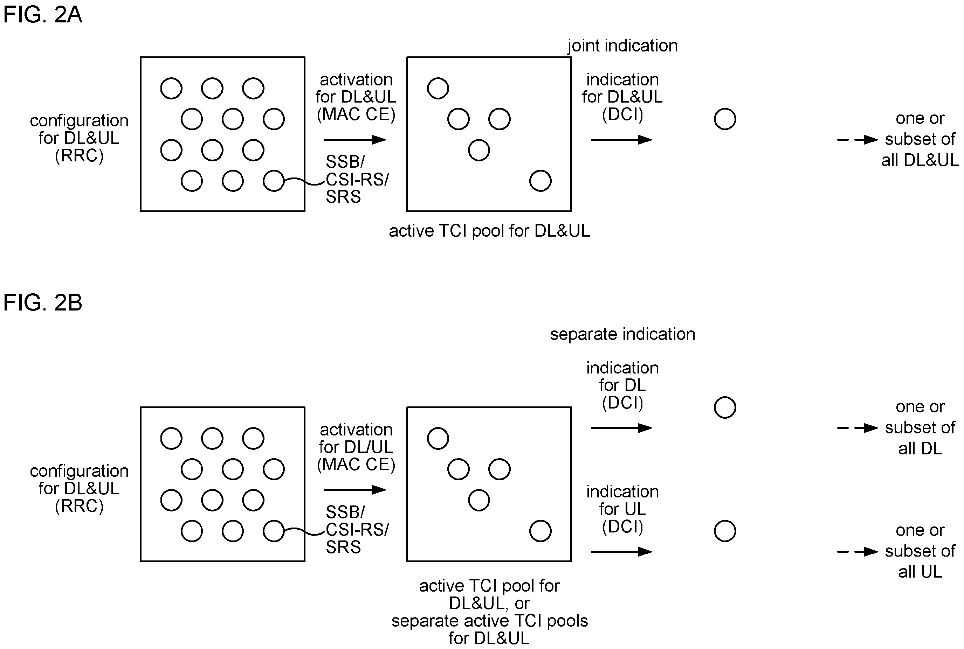

In an example of FIG. 2A, the RRC parameter (information element) configures a plurality of TCI states for both of the DL and UL. The MAC CE may activate a plurality of TCI states out of the plurality of configured TCI states. DCI may indicate one of the plurality of activated TCI states. The DCI may be UL/DL DCI. The indicated TCI state may be applied to at least one (or all) of UL/DL channels/RSs. Single DCI may indicate both a UL TCI and a DL TCI.

In the example of FIG. 2A, one dot may be one TCI state applied to both of the UL and DL, or may be two TCI states applied to the respective UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that in the present disclosure, a higher layer parameter (RRC parameter) to configure a plurality of TCI states may be referred to as configuration information to configure a plurality of TCI states, or may be simply referred to as "configuration information." In the present disclosure, a case that one of a plurality of TCI states is indicated by using DCI may be reception of indication information to indicate one of a plurality of TCI states included in the DCI, or may simply be reception of "indication information."

In an example of FIG. 2B, the RRC parameter configures a plurality of TCI states (joint common TCI pool) for both of the DL and UL. The MAC CE may activate a plurality of TCI states (active TCI pool) out of the plurality of configured TCI states. An (separate) active TCI pool for each of the UL and DL may be configured/activated.

DL DCI or new DCI format may select (indicate) one or more (for example, one) TCI states. The selected TCI states may be applied to one or more (or all) DL channels/RSs. The DL channels may be PDCCHs/PDSCHs/CSI-RSs. The UE may determine a TCI state for each DL channel/RS by using TCI state operation (TCI framework) in Rel. 16. UL DCI or new DCI format may select (indicate) one or more (for example, one) TCI states. The selected TCI states may be applied to one or more (or all) UL channels/RSs. The UL channels may be PUSCHs/SRSs/PUCCHs. Thus, different DCIs may separately indicate the UL TCI and the DL DCI.

Existing DCI format 1_1/1_2 may be used for indication of the common TCI state.

A common TCI framework may have separate TCI states for the DL and UL.

### (Unified TCI Framework in Carrier Aggregation (CA))

For Rel-17 (or later versions) NR, introduction of a unified TCI state framework in CA is under study. It is expected that the common TCI state indicated for the UE is common among CCs (cells) (QCL type D among at least CCs). This is due to a case that simultaneous reception of different DL channels/RSs of QCL type D and simultaneous transmission of different UL channels/RSs with spatial relations are not supported by existing specifications (Rel. 15/16) except in a case of transmission/reception using multiple TRPs or the like.

For the unified TCI framework, update/activation of a common TCI state ID performed in order to provide common QCL information/common UL transmission spatial filter across a set of a plurality of configured CCs is under study.

As a TCI state pool for the CA, option 1 and option 2 below are under study.

### [Option 1]

A single TCI state pool configured by RRC may be shared (configured) with a set of a plurality of configured CCs (cells)/BWPs. For example, a cell group TCI state may be defined, or a TCI state pool for PDSCHs in reference cells may be reused. A CC (cell) ID for a QCL type A RS may be absent in a TCI state, and the CC (cell) ID for the QCL type A RS may be determined in accordance with a target CC (cell) with the TCI state.

In option 1, a common TCI state pool is configured for each plurality of CCs/BWPs, and thus when one common TCI state is indicated by using a MAC CE/DCI, the indicated common TCI state may be applied to all CCs/BWPs (all CCs/BWPs included in a pre-configured CC/BWP list).

### [Option 2]

A TCI state pool may be configured by the RRC for each individual CC.

In option 2, when an applied CC/BWP list for simultaneous beam update is pre-configured by using RRC, and beam update is performed by using a MAC CE/DCI in any one of CCs/BWPs included in the CC/BWP list, in a manner similar to that of Rel. 16, the update may be applied to all CCs/BWPs.

In option 1, a common TCI state pool is configured (shared) by the RRC for the plurality of CCs, a TCI state in the common TCI state pool is indicated by the common TCI state ID, and one RS determined based on the TCI state is used for indicating QCL type D across the set of the plurality of configured CCs/ (restriction 1).

In option 2, an individual common TCI state pool is configured by the RRC for each CC, a TCI state in the common state pool is indicated by the common TCI state ID, and one RS determined based on the TCI state is used for indicating QCL type D across the set of the plurality of configured CCs/ (restriction 2).

### (Analysis)

Support for a set of serving cells capable of being addressed by a single MAC CE for activation of two TCI states for CORESETs having the same CORESET ID for all BWPs in a CC set for which a carrier aggregation (CA) scenario has been indicated is under study, the set being RRC configured. Here, a study of a CORESET without configuration of an SFN scheme has not advanced, the CORESET being in the indicated CC set.

There is a case where for the CORESET, some CCs are configured as an SFN, and some CCs are configured as a non SFN. There is a case where on one CC, some CORESETs are configured as an SFN, and some CORESETs are configured as a non SFN.

Here, how to apply a function of simultaneous update per CC list with consideration of an SFN-CORESET becomes an issue.

For TRP-based pre-compensation, QCL assumption is provided for the UE by using an existing QCL type with a certain QCL parameter, the existing QCL type being dropped from an indicated QCL type. The UE does not expect that different SFN schemes (scheme 1 or TRP-based pre-compensation scheme) are configured for a PDCCH and a PDSCH. The UE does not expect that different SFN schemes (scheme 1 or TRP-based pre-compensation scheme) are configured for different CORESETs.

As a combination of schemes for the PDCCH and the PDSCH (scheme for the PDCCH, scheme for the PDSCH), the following combinations are allowed.
- (Single TRP, scheme 1)
- (Single TRP, TRP-based pre-compensation scheme)
- (scheme 1, Single TRP)
- (TRP-based pre-compensation scheme, Single TRP)
- (scheme 1, scheme 1)
- (TRP-based pre-compensation scheme, TRP-based pre-compensation scheme)

As the combination of schemes for the PDCCH and the PDSCH (scheme for the PDCCH, scheme for the PDSCH), the following combinations are not allowed.
- (TRP-based pre-compensation scheme, scheme 1)
- (scheme 1, TRP-based pre-compensation scheme)

Here, how an SFN scheme is configured for a PDCCH/PDSCH on a CC in the CC list becomes an issue.

Thus, unless a method for determining a TCI state/SFN scheme for a CC list is definite, throughput/communication quality reduction may occur.

Thus, the inventors of the present invention came up with the idea of a method for determining a TCI state/SFN configuration/TRP configuration for a CC list.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate (or specify), select, configure, update, determine, and the like may be interchangeably interpreted. In the present disclosure, "support," "control," "controllable," "operate," and "operable" may be interchangeably interpreted.

In the present disclosure, radio resource control (RRC), an RRC parameter, an RRC message, a higher layer parameter, an information element (IE), and configuration may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a sub-set, and the like may be interchangeably interpreted.

In the present disclosure, "parameter X is not configured," "parameter X does not exist," "parameter X is absent," "parameter X is not configured as enabled," "parameter X is configured as disabled," and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (COntrol REsource SET (CORESET)), a Physical Downlink Shared Channel (PDSCH), a code word (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, or a PUCCH resource group), a resource (for example, a reference signal resource or an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a single TRP, a single-TRP system, single-TRP transmission, and a single PDSCH may be interchangeably interpreted. In the present disclosure, multiple TRPs, a multi-TRP system, multi-TRP transmission, and multiple PDSCHs may be interchangeably interpreted. In the present disclosure, single DCI, a single PDCCH, multiple TRPs based on single DCI, and activation of two TCI states on at least one TCI code point may be interchangeably interpreted.

In the present disclosure, a single TRP, a channel using a single TRP, a channel using one TCI state/spatial relation, a case that multiple TRPs are not enabled by RRC/DCI, a case that a plurality of TCI states/spatial relations are not enabled by RRC/DCI, and a case that a CORESET pool index (CORESETPoolIndex) value with 1 is not configured for any CORESET, and any code point of a TCI field is not mapped to two TCI states may be interchangeably interpreted.

In the present disclosure, multiple TRPs, a channel using multiple TRPs, a channel using a plurality of TCI states/spatial relations, a case that multiple TRPs are enabled by RRC/DCI, a case that a plurality of TCI states/spatial relations are enabled by RRC/DCI, and at least one of multiple TRPs based on single DCI and multiple TRPs based on multiple DCI may be interchangeably interpreted. In the present disclosure, multiple TRPs based on multiple DCI and a case that a CORESET pool index (CORESETPoolIndex) value with 1 is configured for a CORESET may be interchangeably interpreted. In the present disclosure, multiple TRPs based on single DCI and a case that at least one code point of a TCI field is mapped to two TCI states may be interchangeably interpreted.

In the present disclosure, a new ID, a TRP-ID, a group ID, and a CORESET pool index may be interchangeably interpreted. In the present disclosure, the first value of the new ID, a value 0 of the new ID, and the first TCI state out of two TCI states may be interchangeably interpreted. In the present disclosure, the second value of the new ID, a value 1 of the new ID, and the second TCI state out of the two TCI states may be interchangeably interpreted.

In the present disclosure, TRP #1 (first TRP) may correspond to CORESET pool index = 0, or may correspond to the first TCI state out of two TCI states corresponding to one code point of a TCI field. TRP #2 (second TRP) TRP #1 (first TRP) may correspond to CORESET pool index = 1, or may correspond to the second TCI state out of the two TCI states corresponding to one code point of the TCI field.

In the present disclosure, single DCI (sDCI), a single PDCCH, a multi-TRP system based on single DCI, sDCI-based MTRP, and activation of two TCI states on at least one TCI code point may be interchangeably interpreted.

In the present disclosure, multiple DCI (mDCI), multiple PDCCHs, a multi-TRP system based on multiple DCI, mDCI-based MTRP, and configuration of two CORESET pool indexes or CORESET pool index = 1 (or value being 1 or more) may be interchangeably interpreted.

In the present disclosure, receiving a DL signal (PDSCH/PDCCH) by using an SFN may mean receiving identical data (PDSCH)/control information (PDCCH) by using identical time/frequency resources and/or from a plurality of transmission/reception points. Also, receiving the DL signal by using the SFN may mean receiving the identical data/control information by using identical time/frequency resources and/or by using a plurality of TCI states/spatial domain filters/beams/QCL.

In the present disclosure, an HST-SFN scheme, an SFN scheme in Rel. 17 (or later versions), a new SFN scheme, a new HST-SFN scheme, an HST-SFN scenario in Rel. 17 (or later versions), an HST-SFN scheme for an HST-SFN scenario, an SFN scheme for an HST-SFN scenario, scheme 1, a Doppler pre-compensation scheme, and at least one of scheme 1 (HST scheme 1) and the Doppler pre-compensation scheme may be interchangeably interpreted. In the present disclosure, the Doppler pre-compensation scheme, a base station pre-compensation scheme, a TRP pre-compensation scheme, a pre-Doppler compensation scheme, a Doppler pre-compensation scheme, an NW pre-compensation scheme, and an HST NW pre-compensation scheme may be interchangeably interpreted. In the present disclosure, the pre-compensation scheme, a reduction scheme, an improvement scheme, and a correction scheme may be interchangeably interpreted.

In the present disclosure, an SFN configuration, configuration of an SFN or a non SFN, configuration of whether an SFN is used, configuration of whether two TCI states are used or one TCI state is used, and an SFN scheme may be interchangeably interpreted. In the present disclosure, an SFN, an SFN scheme, scheme 1 or TRP-based pre-compensation scheme, activation of two TCI states, and reception using two TCI states may be interchangeably interpreted. In the present disclosure, a non SFN, a non-SFN scheme, a single TRP, and activation of one TCI state may be interchangeably interpreted.

In the present disclosure, a TRP configuration, configuration of multiple TRPs or a single TRP, configuration of whether multiple TRPs are used, configuration of whether two TCI states are used or one TCI state is used, and a multi-TRP scheme may be interchangeably interpreted.

In the present disclosure, HST scheme 1, an HST TRP-based pre-compensation scheme, an NJCT/URLLC (reliability) multi-TRP scheme, a multi-TRP scheme, and multi-TRP repetition may be interchangeably interpreted.

In the present disclosure, a common beam, a common TCI, a common TCI state, a unified TCI, a unified TCI state, a TCI state applicable to DL and UL, a TCI state applied to a plurality (multiple types) of channels/RSs, a TCI state applicable to multiple types of channels/RSs, and a PL-RS may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a UL common TCI state pool, a DL common TCI state pool, a common TCI state pool configured/activated by RRC/MAC CE, and TCI state information may be interchangeably interpreted.

In the present disclosure, a DL TCI, a DL-only TCI, a separate DL-only TCI, a DL common TCI, a DL unified TCI, a common TCI, and a unified TCI may be interchangeably interpreted. In the present disclosure, a UL TCI, a UL-only TCI, a separate UL-only TCI, a UL common TCI, a UL unified TCI, a common TCI, and a unified TCI may be interchangeably interpreted.

In the present disclosure, configuration/indication/update of a separate TCI state, configuration/indication of a DL-only TCI state, configuration/indication/update of a UL-only TCI state, and configuration/indication/update of a TCI state for DL and UL may be interchangeably interpreted.

In the present disclosure, a case of a joint TCI pool and a case where a joint TCI pool has been configured may be interchangeably interpreted. In the present disclosure, a case of a separate TCI pool and a case where a separate TCI pool has been configured may be interchangeably interpreted.

In the present disclosure, the case where the joint TCI pool has been configured, a case where a TCI pool configured for DL and a TCI pool configured for UL are in common, a case where a TCI pool for both DL and UL has been configured, and a case where one TCI pool (one set of TCIs) has been configured may be interchangeably interpreted.

In the present disclosure, the case where the separate TCI pool has been configured, a case where a TCI pool configured for DL and a TCI pool configured for UL are different from each other, a case where a DL TCI pool (a first TCI pool, a first TCI set) and a UL TCI pool (a second TCI pool, a second TCI set) have been configured, a case where a plurality of TCI pools (a plurality of sets of TCIs) have been configured, and a case where a DL TCI pool has been configured may be interchangeably interpreted. When a DL TCI pool has been configured, a UL TCI pool may be equal to the configured TCI pool.

In the present disclosure, a channel/RS to which the common TCI is applied may be a PDSCH/HARQ-ACK information/PUCCH/PUSCH/CSI-RS/SRS.

In the present disclosure, a case that at least one CORESET on one CC is configured with an SFN, a case that at least one CORESET on the CC is activated with two TCI states, and a case that the CC is configured with an SFN PDCCH/SFN CORESET may be interchangeably interpreted.

In the present disclosure, an indicated CC (cell), an indicated CC (cell)/BWP, and a CC (cell)/BWP indicated by a MAC CE may be interchangeably interpreted. In the present disclosure, a CC (cell) and a CC (cell)/BWP may be interchangeably interpreted.

### (Radio Communication Method)

Any one of an SFN scheme (for example, HST scheme 1 or HST TRP-based pre-compensation scheme) and a non-SFN scheme (for example, NJCT/URLLC (reliability) multi-TRP scheme or single-TRP scheme) may be configured/applied to PDSCHs in respective embodiments below. Any one of an SFN scheme (for example, HST scheme 1 or HST TRP-based pre-compensation scheme) and a non-SFN scheme (for example, NJCT/URLLC multi-TRP scheme or single-TRP scheme) may be configured/applied to PDCCHs in the respective embodiments below.

In the present disclosure, scheme 1 (HST scheme 1) and scheme 1a (NJCT/URLLC scheme 1a) may be interchangeably interpreted.

### <First Embodiment>

This embodiment relates to a restriction on an SFN configuration (configuration of an SFN or a non SFN) for a PDCCH/PDSCH on each CC in a CC list.

### <<Aspect 1a>>

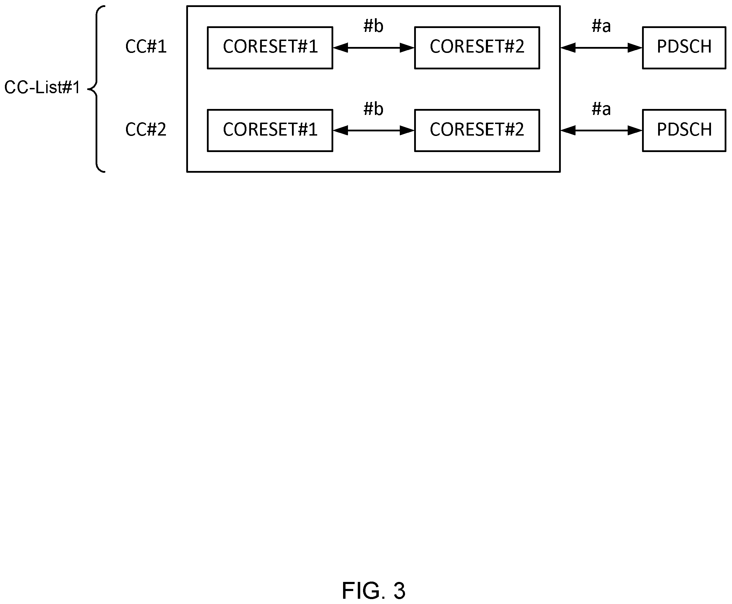

A PDCCH and a PDSCH on the same CC may follow any one of aspect 1a-1 to aspect 1a-2 below. In FIG. 3, CC list #1 includes CC #1 and CC #2. In FIG. 3, aspect 1a may include relationship #a between CORESET #1 and CORESET #2 and a PDSCH on CC #1 (with the same or different SFN configurations) and relationship #a between CORESET #1 and CORESET #2 and a PDSCH on CC #2 (with the same or different SFN configurations).

### [Aspect 1a-1]

For the PDCCH and the PDSCH on the same CC, SFN configurations (configurations of an SFN or a non SFN) are the same. The SFN in this case may follow any one of choice 1 and choice 2 below.

### [[Choice 1]]

The SFN configurations for the PDCCH and the PDSCH on the same CC may be the same SFN scheme (scheme 1 or TRP-based pre-compensation scheme).

### [[Choice 2]]

It is only necessary that the SFN configurations for the PDCCH and the PDSCH on the same CC are SFNs (any one of scheme 1 or TRP-based pre-compensation scheme).

### [Aspect 1a-2]

For the PDCCH and the PDSCH on the same CC, SFN configurations (configurations of an SFN or a non SFN) may be different from each other. For example, the PDCCH may be an SFN, and the PDSCH may be a non SFN, or the PDCCH may be a non SFN, and the PDSCH may be an SFN.

### <<Aspect 1b>>

When an SFN PDCCH has been configured (for at least one CORESET), a plurality of PDCCHs/a plurality of CORESETs on the same CC may follow any one of aspect 1b-1 to aspect 1b-3 below. In FIG. 3, aspect 1b may include relationship #b between CORESET #1 and CORESET #2 on CC #1 (with the same or different SFN configurations) and relationship #b between CORESET #1 and CORESET #2 on CC #2 (with the same or different SFN configurations).

### [Aspect 1b-1]

All CORESETs may be configured as an SFN. The SFN in this case may follow any one of choice 1 and choice 2 below.

### [[Choice 1]]

The same SFN scheme (scheme 1 or TRP-based pre-compensation scheme) is configured for all CORESETs.

### [[Choice 2]]

Scheme 1 may be configured for some CORESETs, and the TRP-based pre-compensation scheme may be configured for some CORESETs.

### [Aspect 1b-2]

An SFN may be configured for some CORESETs, and a non SFN may be configured for some CORESETs.

### [Aspect 1b-3]

Based on aspect 1b-2, a restriction related to a CORESET with configuration of a non SFN or an SFN is added. For example, the non SFN can be configured for CORESET #0, and a CORESET of a common serach space (CSS) or SS type #x (type #x-PDCCH CSS set) can be configured as the non SFN.

PDCCH configuration with configuration of the SFN (scheme 1 or TRP-based pre-compensation scheme) may be indicated by a new RRC parameter for a CC, or may be implicitly indicated when at least one CORESET is activated by a MAC CE with two TCI states.

### <<Aspect 1c>>

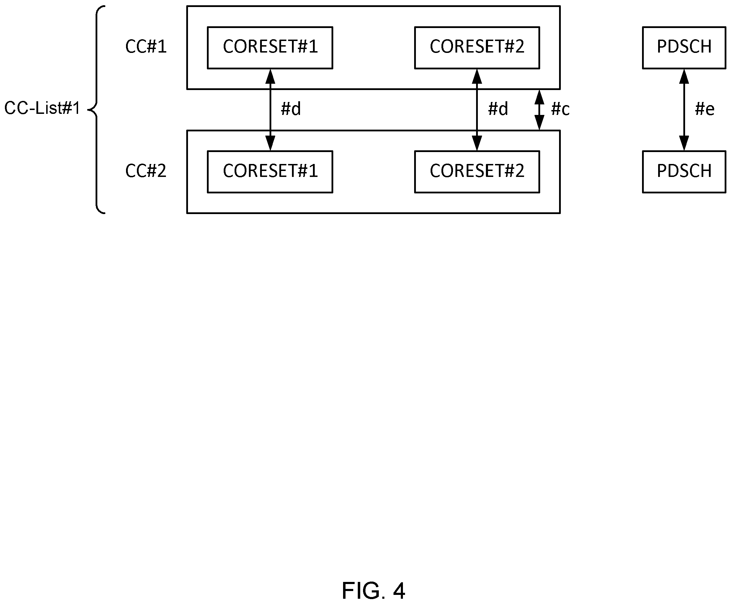

PDCCH/CORESETs across CCs in a CC list for simultaneous control per CC list may follow any one of aspect 1c-1 to aspect 1c-2 below. In FIG. 4, CC list #1 includes CC #1 and CC #2. In FIG. 4, aspect 1c may include relationship #c between CORESET #1 and CORESET #2 on CC #1 and CORESET #1 and CORESET #2 on CC #2 (with the same or different SFN configurations).

### [Aspect 1c-1]

For all CCs, SFN configurations (configurations of an SFN or a non SFN) are the same.

### [Aspect 1c-2]

For CORESETs from different CCs, SFN configurations (configurations of an SFN or a non SFN) may be different from each other. For example, the SFN may be configured for a CORESET on CC #1, and the non SFN may be configured for a CORESET on CC #2.

### <<Aspect 1d>>

CORESETs having the same CORESET ID across the CCs in the CC list may follow any one of aspect 1d-1 to aspect 1d-2 below. In FIG. 4, aspect 1d may include relationship #d between CORESET #1 on CC #1 and CORESET #1 on CC #2 (with the same or different SFN configurations) and relationship #d between CORESET #1 on CC #1 and CORESET #2 on CC #2 (with the same or different SFN configurations).

### [Aspect 1d-1]

SFN configurations (configurations of an SFN or a non SFN) for CORESETs having the same CORESET ID across the CCs in the CC list are the same.

### [Aspect 1d-2]

SFN configurations (configurations of an SFN or a non SFN) for CORESETs having the same CORESET ID across the CCs in the CC list may be different from each other. For example, the SFN may be configured for CORESET #1 on CC #1 (activated with two TCI states), and the non SFN may be configured for CORESET #1 on CC #2 (activated with one TCI state).

### <<Aspect 1e>>

PDSCHs across CCs in a CC list for simultaneous control per CC list may follow any one of aspect 1e-1 to aspect 1e-2 below. In FIG. 4, aspect 1e may include relationship #c between a PDSCH on CC #1 and a PDSCH on CC #2.

### [Aspect 1e-1]

For all CCs, SFN configurations (configurations of an SFN or a non SFN) are the same.

### [Aspect 1e-2]

For PDSCHs from different CCs, SFN configurations (configurations of an SFN or a non SFN) may be different from each other. For example, the SFN may be configured for the PDSCH on CC #1, and the non SFN may be configured for the PDSCH on CC #2.

If PDCCHs/PDSCHs on different CCs in the CC list have been configured with the same scheme for a CORESET with specific CORESET ID #x, the CORESET may be configured/activated with different numbers of TCI states (SFN configurations (configurations of an SFN or a non SFN)) on the different CCs. As mentioned in aspect 1d-2, the SFN PDCCH/SFN CORESET does not mean that all CORESETs on the CC are configured with two TCI states. A restriction that all CORESETs on one CC are configured with the same SFN scheme (scheme 1 or TRP-based pre-compensation scheme) may be defined.

According to this embodiment, a UE can appropriately determine a scheme for a PDCCH/PDSCH on each CC in a CC list.

### <Second Embodiment>

This embodiment relates to TCI state update for a PDCCH. Specifically, this embodiment relates to a case where a MAC CE activates/deactivates two TCI states for one CORESET.

When a UE has received a new MAC CE (for example, a MAC CE defined in Rel. 17 (or later versions)) to activate two TCI states for one CORESET ID in one CC in a CC list, the UE may follow at least one of aspect 2-0 to aspect 2-6 below.

### <<Aspect 2-0>>

The MAC CE is applied to all CCs in the CC list. The MAC CE may update two TCI states for the same CORESET ID (CORESET ID indicated by the MAC CE) on each CC in the CC list.

### <<Aspect 2-1>>

All CCs in the CC list have the same SFN configuration (configuration of an SFN or a non SFN), and the MAC CE is applied to all CCs in the CC list. For example, as described in aspect 1c-1, each CC has an SFN configuration for at least one CORESET (for each CC).

In a case where all CCs in the CC list do not have the same SFN configuration, the case may be an error case for the UE, or the UE may employ aspect 2-4/2-5 mentioned below.

### <<Aspect 2-2>>

Some CCs in a CC list may be configured with an SFN CORESET. Some CCs may be configured with a non-SFN CORESET (for example, aspect 1c-2). The UE may follow any one of choice 1 to choice 3 below.

### [Choice 1]

The MAC CE is applied to all CCs in the CC list.

### [Choice 2]

The MAC CE is applied to some CCs configured with the SFN CORESET, and is not applied to a CC configured with the non-SFN CORESET.

### [Choice 3]

The MAC CE is applied to some CCs configured with the SFN CORESET. For the CC configured with the non-SFN CORESET, the MAC CE may update one TCI state for the same CORESET ID on the CC. The one TCI state may be a TCI state with the lowest TCI state ID, the first TCI state, or the second TCI state in the two TCI states.

### <<Aspect 2-3>>

Based on aspect 2-1/2-2, the UE ascertains/judges configuration of the same CORESET ID on another CC in the CC list. The UE may follow any one of choice 1 to choice 2 below.

### [Choice 1]

The MAC CE may be applied to some CCs with a CORESET activated with two TCI states, the CORESET having the same CORESET ID, and may not be applied to a CC with a CORESET activated with one TCI state, the CORESET having the same CORESET ID.

### [Choice 2]

The MAC CE is applied to some CCs with a CORESET activated with two TCI states, the CORESET having the same CORESET ID. For a CC with a CORESET activated with one TCI state and having the same CORESET ID, the MAC CE may update one TCI state for a CORESET having the same CORESET ID on the CC. The one TCI state may be a TCI state with the lowest TCI state ID, the first TCI state, or the second TCI state out of two TCI states indicated by the MAC CE.

In aspect 2-2, if the CC has been configured with an SFN PDCCH, even when a CORESET with is the same CORESET ID on the CC is not activated with two TCI states, the CORESET may be updated to the two TCI states. In aspect 2-3, the UE may ascertain whether a CORESET with the same CORESET ID on the CC has been activated with two TCI states, and may judge whether to apply the MAC CE to each CC.

### <<Aspect 2-4>>

The MAC CE is applied only to an indicated CC, and is not applied to another CC in the CC list.

### <<Aspect 2-5>>

The MAC CE is applied only to an indicated CC. For another CC in the CC list, the MAC CE updates one TCI state for a CORESET having the same CORESET ID on another each CC. When two TCI states have been indicated for the CORESET ID, the one TCI state may be a TCI state with the lowest TCI state ID, the first TCI state, or the second TCI state.

### <<Aspect 2-6>>

The MAC CE includes a new field to indicate whether the MAC CE is applied only to an indicated CC or is applied to all CCs in the CC list. When the new field is 0, the MAC CE may be applied only to the indicated CC. When the new field is 1, the MAC CE may be applied to all CCs in the CC list. Operation in a case where the new field is 1 and operation in a case where the new field is 0 may be replaced with each other.

According to this embodiment, the UE can, when receiving a MAC CE to indicate two TCI states for a CORESET/PDCCH on a certain CC in a CC list, appropriately determine a TCI state on the CC in the CC list.

### <Third Embodiment>

This embodiment relates to TCI state update for a PDCCH. Specifically, this embodiment relates to a case where a MAC CE activates/deactivates one TCI state for one CORESET.

When at least one CC in a CC list has been configured with an SFN CORESET, and a UE has received an existing MAC CE to activate one TCI state for a certain CORESET ID on a certain CC in the CC list (Rel-16 MAC CE/TCI states Indication for UE-specific PDCCH MAC CE), the UE may follow at least one of aspect 3-0 to aspect 3-6 below.

### <<Aspect 3-0>>

The MAC CE is applied to all CCs in the CC list. The MAC CE may update one TCI state for the same CORESET ID (CORESET ID indicated by the MAC CE) on each CC in the CC list.

### <<Aspect 3-1>>

The MAC CE is applied to CCs that are configured with a non-SFN CORESET, and is not applied to CCs that are configured with an SFN CORESET.

### <<Aspect 3-2>>

The MAC CE is applied to CCs that are configured with the non-SFN CORESET. For a CC configured with the SFN CORESET, the MAC CE may update one TCI state out of two TCI states so that the one TCI state becomes a new TCI state (indicated TCI state), and may not change the other TCI state. The one TCI state may be a TCI state with the lowest TCI state ID, the first TCI state, or the second TCI state out of the two TCI states.

### <<Aspect 3-3>>

Based on aspect 3-1/3-2, the UE checks/judges configuration of the same CORESET ID on another CC in the CC list. The UE may follow any one of choice 1 to choice 2 below.

### [Choice 1]

The MAC CE may be applied to some CCs with a CORESET activated with one TCI state, the CORESET having the same CORESET ID, and may not be applied to a CC with a CORESET activated with two TCI states, the CORESET having the same CORESET ID.

### [Choice 2]

The MAC CE is applied to some CCs with a CORESET activated with one TCI state, the CORESET having the same CORESET ID. For a CC with a CORESET activated with two TCI states and having the same CORESET ID, the MAC CE may update, to a new TCI state (indicated TCI state), one TCI state out of two TCI states for the CORESET with the same CORESET ID on the CC, and may not change the other TCI state. The one TCI state may be a TCI state with the lowest TCI state ID, the first TCI state, or the second TCI state out of the two TCI states.

### <<Aspect 3-4>>

All CCs in the CC list have the same SFN configuration (configuration of an SFN or a non SFN). In this case, the UE may follow choice 1 or choice 2 below.

### [Choice 1]

This case is an error case for the UE.

### [Choice 2]

The MAC CE is applied only to an indicated CC, and is not applied to any nother CCs in the CC list.

### <<Aspect 3-5>>

When at least one CC in the CC list has been configured with the SFN CORESET, the UE does not expect that one TCI state is indicated for a certain CORESET on a certain CC in the CC list.

### <<Aspect 3-6>>

The MAC CE includes a new field to indicate whether the MAC CE is applied only to an indicated CC or is applied to all CCs in the CC list. When the new field is 0, the MAC CE may be applied only to the indicated CC. When the new field is 1, the MAC CE may be applied to all CCs in the CC list. Operation in a case where the new field is 1 and operation in a case where the new field is 0 may be replaced with each other.

According to this embodiment, the UE can, when receiving a MAC CE to indicate one TCI state for a CORESET/PDCCH on a certain CC in a CC list, appropriately determine a TCI state on the CC in the CC list.

### <Fourth Embodiment>

This embodiment relates to TCI state update for a PDSCH. Specifically, this embodiment relates to a case where a MAC CE activates/deactivates one or two TCI states for one TCI code point.

When a UE has received a MAC CE to activate/deactivate one or two TCI states for each TCI code point for a UE-specific PDSCH for an SFN PDSCH for a certain CC in a CC list, the UE may follow at least one of aspect 4-0 to aspect 4-5 below.

### <<Aspect 4-0>>

The MAC CE is applied to all CCs in the CC list. The MAC CE may update one or two TCI states for each TCI code point in DCI.

### <<Aspect 4-1>>

All CCs in the CC list have the same SFN configuration (configuration of an SFN or a non SFN), and the MAC CE is applied to all CCs in the CC list.

In a case where all CCs in the CC list do not have the same SFN configuration, the case may be an error case for the UE, or the UE may employ aspect 4-3/4-4 mentioned below.

### <<Aspect 4-2>>

Some CCs in a CC list may be configured with an SFN PDSCH. Some CCs may be configured with a non-SFN PDSCH. The UE may follow any one of choice 1 to choice 3 below.

### [Choice 1]

The MAC CE is applied to all CCs in the CC list.

### [Choice 2]

The MAC CE is applied to some CCs configured with the SFN PDSCH, and is not applied to a CC configured with the non-SFN PDSCH.

### [Choice 3]

The MAC CE is applied to some CCs configured with the SFN PDSCH. For the CC configured with the non-SFN PDSCH, the UE may select/update one TCI state out of two TCI states for each TCI code point for the CC. The one TCI state may be a TCI state with the lowest TCI state ID, the first TCI state, or the second TCI state out of the two TCI states.

### <<Aspect 4-3>>

The MAC CE is applied only to an indicated CC, and is not applied to any other CCs in the CC list.

### <<Aspect 4-4>>

The MAC CE is applied only to an indicated CC. For another CC in the CC list, the UE selects/updates one TCI state for each TCI code point for the CC. When two TCI states have been indicated for the TCI code point, the one TCI state may be a TCI state with the lowest TCI state ID, the first TCI state, or the second TCI state out of the two TCI states.

### <<Aspect 4-5>>

The MAC CE includes a new field to indicate whether the MAC CE is applied only to an indicated CC or is applied to all CCs in the CC list. When the new field is 0, the MAC CE may be applied only to the indicated CC. When the new field is 1, the MAC CE may be applied to all CCs in the CC list. Operation in a case where the new field is 1 and operation in a case where the new field is 0 may be replaced with each other.

According to this embodiment, the UE can, when receiving a MAC CE to indicate one or two TCI states for one TCI code point for a PDSCH on a certain CC in a CC list, appropriately determine a TCI state on the CC in the CC list.

### <Fifth Embodiment>

This embodiment relates to TCI state update for a PDSCH. Specifically, this embodiment relates to a case where a MAC CE activates/deactivates one TCI state for one TCI code point.

In a certain CC list, if at least one CC has been configured with an SFN PDSCH, and a UE has received a MAC CE to activate/deactivate one TCI state for a UE-specific PDSCH for each TCI code point in DCI for a certain CC in the CC list, the UE may follow at least one of aspect 5-0 to aspect 5-4 below.

### <<Aspect 5-0>>

The MAC CE is applied to all CCs in the CC list. The MAC CE may update one TCI state for each TCI code point for each CC in the CC list.

### <<Aspect 5-1>>

The MAC CE is applied to CCs that are configured with a non-SFN PDSCH, and is not applied to CCs that are configured with an SFN PDSCH.

### <<Aspect 5-2>>

All CCs in the CC list have the same SFN configuration (configuration of an SFN or a non SFN). In this case, the UE may follow choice 1 or choice 2 below.

### [Choice 1]

This case is an error case for the UE. It may be defined that the UE is expected to receive a MAC CE to activate/deactivate one or two TCI states for each TCI code point for the UE-specific PDSCH.

### [Choice 2]

The MAC CE is applied only to an indicated CC, and is not applied to any other CCs in the CC list.

### <<Aspect 5-3>>

When at least one CC in the CC list has been configured with an SFN for a PDSCH, the UE does not expect that one TCI state is indicated for a PDSCH on a certain CC in the CC list.

### <<Aspect 5-4>>

The MAC CE includes a new field to indicate whether the MAC CE is applied only to an indicated CC or is applied to all CCs in the CC list. When the new field is 0, the MAC CE may be applied only to the indicated CC. When the new field is 1, the MAC CE may be applied to all CCs in the CC list. Operation in a case where the new field is 1 and operation in a case where the new field is 0 may be replaced with each other.

In this embodiment, the SFN PDSCH may be interpreted as multiple TRPs for NJCT/URLLC.

According to this embodiment, the UE can, when receiving a MAC CE to indicate one TCI state for one TCI code point for a PDSCH on a certain CC in a CC list, appropriately determine a TCI state on the CC in the CC list.

### <Sixth Embodiment>

This embodiment relates to update of a common TCI state/unified TCI state.

For a CC in a CC list, the common TCI state may follow at least one of aspect 6-1 to aspect 6-2 below.

### <<Aspect 6-1>>

The CC in the CC list has a new (Rel. 17 (or later versions)) common (unified) TCI state configuration. A new (Rel. 17 (or later versions)) RRC parameter (new CC list) for the CC list may be configured. The new CC list may indicate only a CC on which an existing (Rel-15/16) TCI state is not configured for a PDSCH/PDCCH or the like.

The common TCI state may follow any one of aspect 6-1-1 to aspect 6-1-3 below.

### [Aspect 6-1-1]

For the CCs in the CC list, the common TCI state is a joint DL/UL common configuration (TCI state configuration common to DL and UL).

### [Aspect 6-1-2]

For the CCs in the CC list, the common TCI state is a separate DL/UL common configuration (separate (independent) TCI state configurations for respective DL and UL).

### [Aspect 6-1-3]

Some CCs in the CC list have the joint DL/UL common configuration, and some CCs in the CC list have the separate DL/UL common configuration. Any CC in the CC list may not have an existing (Rel-16) TCI state configuration.

### <<Aspect 6-2>>

Some CCs in the CC list are configured with a new common TCI state configuration (for example, a joint common TCI state or a separate common TCI state), and some CCs in the CC list are configured with an existing TCI state configuration.

For the CC in the CC list with the configuration of aspect 6-1-1, the UE may expect that a MAC CE to activate/deactivate a joint common TCI state for the DL and UL is received. Reception of another MAC CE to activate/deactivate a TCI state for another TCI configuration may be an error case.

For the CCs in the CC list with the configuration of aspect 6-1-2, the UE may expect that a MAC CE to activate/deactivate a separate common TCI state for the DL and UL is received. Reception of another MAC CE to activate/deactivate a TCI state for another TCI configuration may be an error case.

For the CCs in the CC list with the configuration of aspect 6-1-3, when the UE has received a MAC CE for a certain purpose, the UE may follow any one of choice 0 to choice 6 below. For example, the purpose may be activation/deactivation of a joint common TCI state, or may be activation/deactivation of a separate common TCI state.

### [Choice 0]

For the configuration of aspect 6-1-3, reception of the MAC CE is an error case.

### [Choice 1]

The MAC CE is applied to all CCs in the CC list.

### [Choice 2]

The MAC CE is applied to some CCs configured with the same TCI configuration as that for an indicated CC, and is not applied to CCs configured with a TCI configuration different from that for the indicated CC.

### [Choice 3]

The MAC CE is applied to some CCs configured with the same TCI configuration as that for an indicated CC. The MAC CE is applied to CCs configured with a TCI configuration different from that for the indicated CC, in accordance with a certain method. For example, the method may be update of only a DL TCI state, or may be update of only a UL TCI state.

### [Choice 4]

The MAC CE may be applied only to an indicated CC, and may not be applied to another CC. Alternatively, the MAC CE may be applied to anything other than an indicated CC in the CC list (another CC), and may not be applied to the indicated CC.

### [Choice 5]

The MAC CE is applied only to an indicated CC. The MAC CE is applied to other CCs in accordance with a certain method. For example, the method may be update of only a DL TCI state, or may be update of only a UL TCI state.

### [Choice 6]

The MAC CE includes a new field to indicate whether the MAC CE is applied only to an indicated CC or is applied to all CCs in the CC list. When the new field is 0, the MAC CE may be applied only to the indicated CC. When the new field is 1, the MAC CE may be applied to all CCs in the CC list.

For the CC in the CC list with the configuration of aspect 6-2, the UE may follow any one of choice 0 to choice 6 below. For example, the purpose may be activation/deactivation of a joint common TCI state, may be activation/deactivation of a separate common TCI state, or may be activation/deactivation of an existing TCI state.

### [Choice 0]

For the configuration of aspect 6-2, reception of the MAC CE is an error case.

### [Choice 1]

The MAC CE is applied to all CCs in the CC list.

### [Choice 2]

The MAC CE is applied to some CCs configured with the same TCI configuration as that for an indicated CC, and is not applied to CCs configured with a TCI configuration different from that for the indicated CC.

### [Choice 3]

The MAC CE is applied to some CCs configured with the same TCI configuration as that for an indicated CC. The MAC CE is applied to CCs configured with a TCI configuration different from that for the indicated CC, in accordance with a certain method. For example, the method may be update of only a DL TCI state, or may be update of only a UL TCI state.

### [Choice 4]

The MAC CE may be applied only to an indicated CC, and may not be applied to other CCs. Alternatively, the MAC CE may be applied to anything other than an indicated CC in the CC list (other CCs), and may not be applied to the indicated CC.

### [Choice 5]

The MAC CE is applied only to an indicated CC. The MAC CE is applied to another CC in accordance with a certain method. For example, the method may be update of only a DL TCI state, or may be update of only a UL TCI state.

### [Choice 6]

The MAC CE includes a new field to indicate whether the MAC CE is applied only to an indicated CC or is applied to all CCs in the CC list. When the new field is 0, the MAC CE may be applied only to the indicated CC. When the new field is 1, the MAC CE may be applied to all CCs in the CC list.

According to this embodiment, the UE can, when receiving a MAC CE to indicate a common (unified) TCI state on a certain CC in a CC list, appropriately determine a TCI state on the CC in the CC list.

### <Other Embodiments>

### <<Variation>>

In a fourth/fifth embodiment, the SFN PDSCH may be interpreted as multiple TRPs (multi-TRP repetition) for NJCT/URLLC. In this case, the SFN and the non SFN may be interpreted as multiple TRPs and a single TRP, respectively. In this case, the SFN configuration (configuration of the SFN or the non SFN) may be interpreted as a TRP configuration (configuration of multiple TRPs or a single TRP).

### <<UE Capability Information/Higher Layer Parameter>>

A higher layer parameter (RRC IE)/UE capability corresponding to a function (characteristic, feature) in each embodiment described above may be defined. The higher layer parameter may indicate whether the function is enabled. The UE capability may indicate whether a UE supports the function.

A UE for which the higher layer parameter corresponding to the function has been configured may perform the function. A "case that a UE for which the higher layer parameter corresponding to the function has not been configured does not perform the function (for example, follows Rel. 15/16)" may be defined.

A UE that has reported/transmitted the UE capability indicating that the function is supported may perform the function. A "case that a UE that has not reported the UE capability indicating that the function is supported does not perform the function (for example, follows Rel. 15/16)" may be defined.

When a UE has reported/transmitted the UE capability indicating that the function is supported, and the higher layer parameter corresponding to the function has been configured, the UE may perform the function. A "case that when a UE does not report/transmit the UE capability indicating that the function is supported or when the higher layer parameter corresponding to the function is not configured, the UE does not perform the function (for example, follows Rel. 15/16)" may be defined.

Which embodiment/option/choice/function out of a plurality of embodiments described above is used may be configured by a higher layer parameter, may be reported by a UE as a UE capability, may be defined in specifications, or may be determined by a reported UE capability and higher layer parameter configuration.

The UE capability may indicate whether at least one function of the following is supported.
- Same or different SFN configurations for PDCCH/PDSCH on same CC or across plurality of CCs
- Reception of MAC CE to activate two TCI states for certain CORESET ID for certain CC in CC list in case where at least one CC in that CC list has been configured with SFN CORESET
- Application of that MAC CE to plurality of CCs (in that list)
- Reception of MAC CE to activate one TCI state for certain CORESET ID for certain CC in CC list in case where all CCs in that CC list have been configured with SFN CORESET
- Application of that MAC CE to plurality of CCs (in that list)
- Reception of MAC CE to activate one or two TCI states for each TCI code point for UE-specific PDSCH for certain CC in CC list in case where at least one CC in that CC list has been configured with SFN CORESET
- Application of that MAC CE to plurality of CCs (in that list)
- Reception of MAC CE to activate one TCI state for each TCI code point for UE-specific PDSCH for certain CC in CC list in case where all CCs in that CC list have been configured with SFN CORESET
- Application of that MAC CE to plurality of CCs (in that list)
- Same or different TCI state configurations across plurality of CCs in CC list
- Reception of MAC CE for certain TCI configuration for certain purpose in CC list
- Application of that MAC CE to plurality of CCs (in that list)

The UE capability may be separate UE capabilities or combined UE capability for aspect 1a to aspect 1e in a first embodiment.

The UE capability may be separate UE capabilities or combined UE capability for aspects 6-1/6-1-1/6-1-2/6-1-3/6-2 in a sixth embodiment.

According to the UE capability/higher layer parameter described above, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

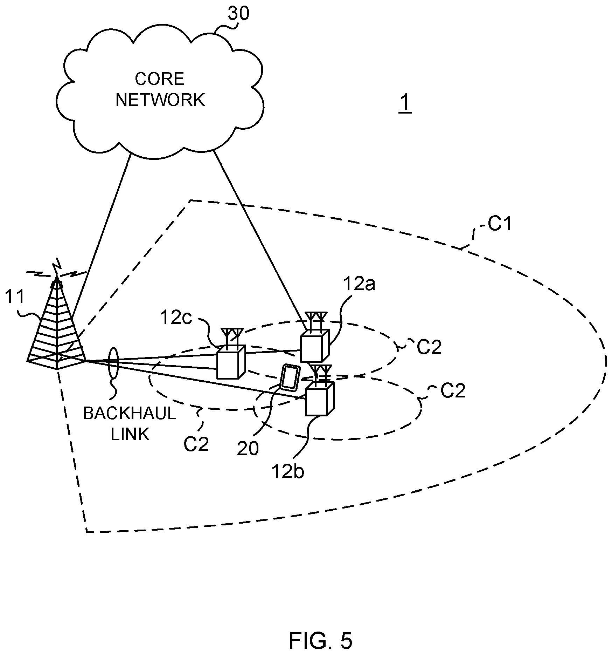

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

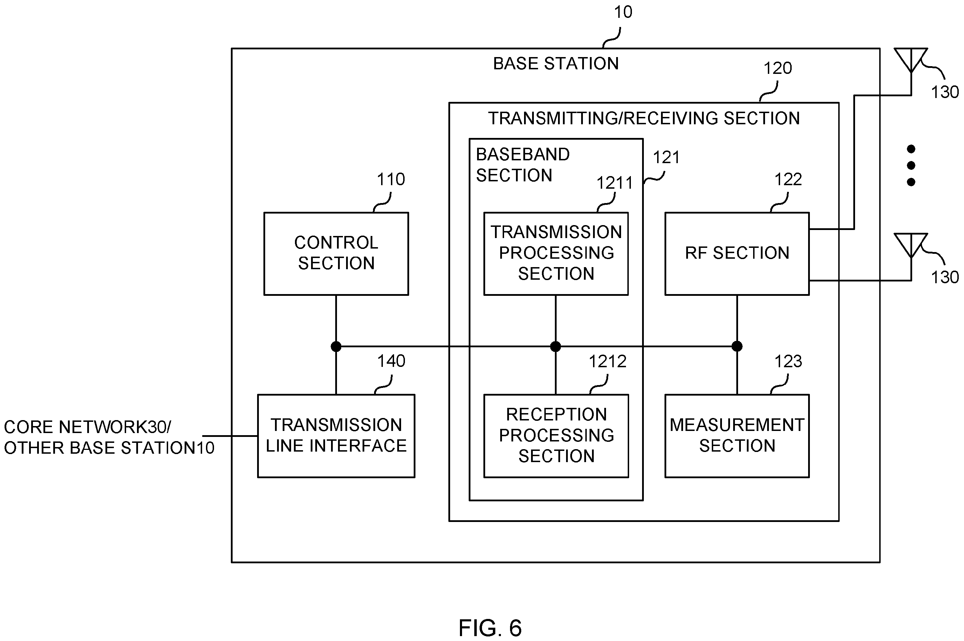

FIG. 6 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a list of a plurality of cells, and may transmit a medium access control (MAC) control element (CE) to activate one or more transmission configuration indication (TCI) states for a control resource set for a physical downlink control channel on one cell out of the plurality of cells. The control section 110 may apply one or more active TCI states to one or more cells out of the plurality of cells.

The transmitting/receiving section 120 may transmit a list of a plurality of cells, and may transmit a medium access control (MAC) control element (CE) to activate one or more TCI states for a transmission configuration indication (TCI) code point for a physical downlink shared channel on one cell out of the plurality of cells. The control section 110 may apply one or more active TCI states to one or more cells out of the plurality of cells.

### (User Terminal)

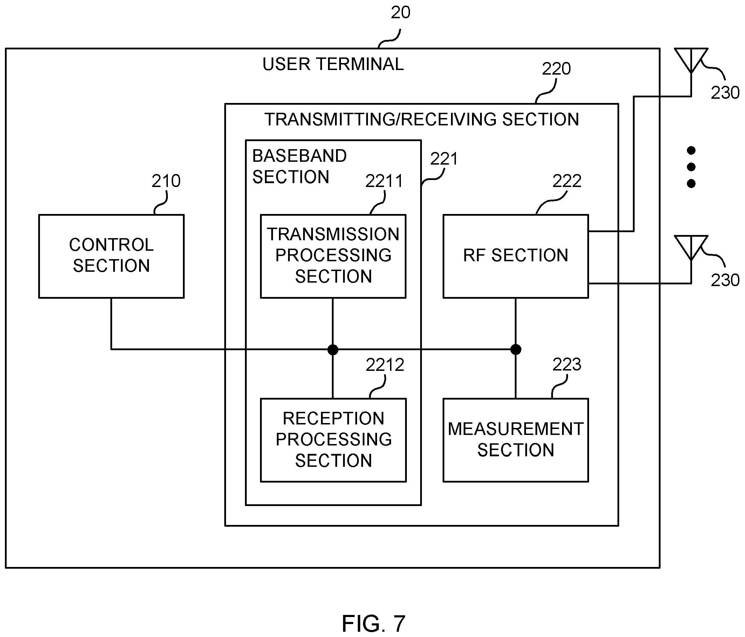

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration of a sounding reference signal (SRS) resource set, and may receive downlink control information including a plurality of indications of an SRS resource of the SRS resource set. The control section 210 may apply the plurality of indications to a respective plurality of frequency parts used for non-codebook transmission of a physical uplink shared channel.

The number of the plurality of frequency parts may be Y. The downlink control information may include Y or Y/2 fields for the SRS resource set.

The physical uplink shared channel may include two code words. The number of the plurality of frequency parts may be Y. The downlink control information may include 2Y fields for the SRS resource set.

Respective SRS resources of the SRS resource set may use a part of a band for the physical uplink shared channel.

The transmitting/receiving section 220 may receive a list of a plurality of cells (for example, a CC list), and may receive a medium access control (MAC) control element (CE) to activate one or more transmission configuration indication (TCI) states for a control resource set (CORESET) for a physical downlink control channel (PDCCH) on one cell out of the plurality of cells. The control section 210 may apply/determine one or more active TCI states for one or more cells out of the plurality of cells.

The control section 210 may determine the one or more cells and the one or more active TCI states based on at least one of a configuration of a single frequency network (SFN), a configuration of repetition of the physical downlink control channel, an ID of the control resource set, and the number of the one or more TCI states for the control resource set.

The configuration of the SFN may be applied to all or a part of the plurality of cells.

The one or more TCI states may be a common TCI state.

The transmitting/receiving section 220 may receive a list of a plurality of cells (for example, a CC list), and may receive a medium access control (MAC) control element (CE) to activate one or more TCI states for a transmission configuration indication (TCI) code point for a physical downlink shared channel (PDSCH) on one cell out of the plurality of cells. The control section 210 may apply/determine one or more active TCI states for one or more cells out of the plurality of cells.

The control section 210 may determine the one or more cells and the one or more active TCI states based on at least one of a configuration of a single frequency network (SFN), a configuration of repetition of the physical downlink shared channel, and the number of the one or more TCI states for the TCI code point.

The configuration of the SFN may be applied to all or a part of the plurality of cells.

The one or more TCI states may be a common TCI state.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

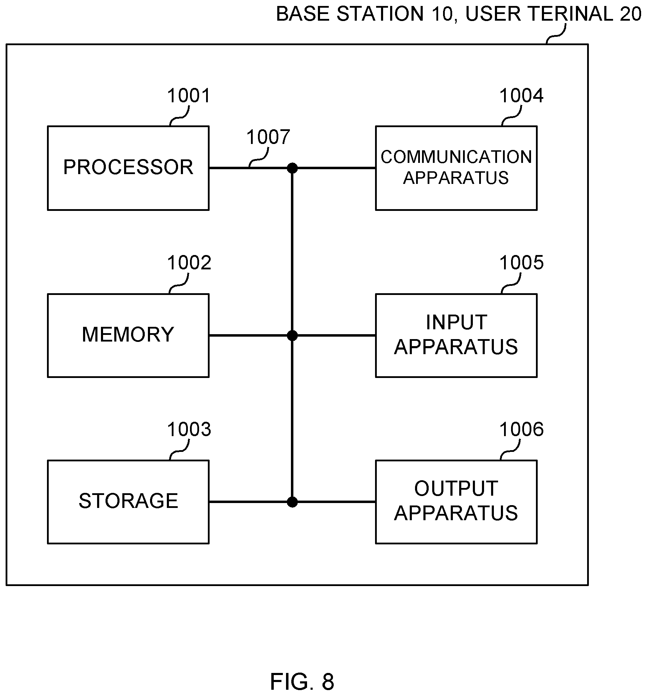

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or code words, or may be the unit of processing in scheduling, link adaptation, and so on. Note that, when TTIs are given, the time interval (for example, the number of symbols) to which transport blocks, code blocks, code words, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to expect to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

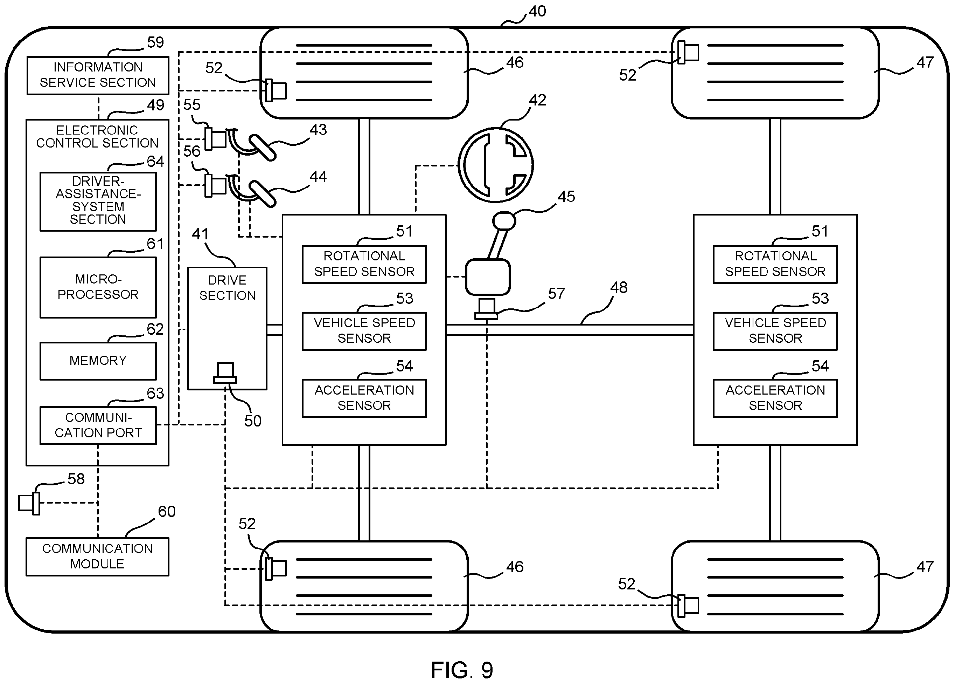

FIG. 9 is a diagram to show an example of a vehicle according to one embodiment. As shown in FIG. 9, a vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

A driver-assistance-system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, and information obtained based on the signals, to the external apparatus via radio communication.

The communication module 60 receives various pieces of information (traffic information, signal information, inter-vehicle distance information, and the like) transmitted from the external apparatus, and displays the various pieces of information on the information service section 59 included in the vehicle. The communication module 60 stores the various pieces of information received from the external apparatus in the memory 62 that can be used by the microprocessor 61. Based on the pieces of information stored in the memory 62, the microprocessor 61 may perform control of the drive section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" as used in the present disclosure does not mean "based only on", unless otherwise specified. In other words, the phrase "based on" means both "based only on" and "based at least on".

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a list of a plurality of cells and that receives a medium access control (MAC) control element (CE) to activate one or more transmission configuration indication (TCI) states for a control resource set for a physical downlink control channel on one cell out of the plurality of cells; and
a control section that applies one or more active TCI states to one or more cells out of the plurality of cells.

2. The terminal according to claim 1, wherein
the control section determines the one or more cells and the one or more active TCI states based on at least one of a configuration of a single frequency network (SFN), a configuration of repetition of the physical downlink control channel, an ID of the control resource set, and the number of the one or more TCI states for the control resource set.

3. The terminal according to claim 2, wherein
the configuration of the SFN is applied to all or a part of the plurality of cells.

4. The terminal according to any one of claims 1 to 3, wherein
the one or more TCI states are a common TCI state.

5. A radio communication method for a terminal, the radio communication method comprising:
receiving a list of a plurality of cells and receiving a medium access control (MAC) control element (CE) to activate one or more transmission configuration indication (TCI) states for a control resource set for a physical downlink control channel on one cell out of the plurality of cells; and
applying one or more active TCI states to one or more cells out of the plurality of cells.

6. A base station comprising:
a transmitting section that transmits a list of a plurality of cells and that transmits a medium access control (MAC) control element (CE) to activate one or more transmission configuration indication (TCI) states for a control resource set for a physical downlink control channel on one cell out of the plurality of cells; and
a control section that applies one or more active TCI states to one or more cells out of the plurality of cells.
